# EUROPEAN PATENT APPLICATION

(11) **EP 4 672 814 A1**
(43) Date of publication of application: **31.12.2025**
(21) Application number: 24777972.1
(22) Date of filing: 25.03.2024
(51) Int. Cl.: H04W 28/24

(54) **METHOD AND APPARATUS FOR COMMUNICATIONS, AND COMPUTER READABLE STORAGE MEDIUM**

(30) Priority: 28.03.2023 CN 202310355253
(71) Applicant: Huawei Technologies Co., Ltd., Shenzhen, Guangdong 518129 (CN)
(72) Inventor: CHEN, Erkai, Shenzhen, Guangdong 518129 (CN); QIN, Yi, Shenzhen, Guangdong 518129 (CN)
(74) Representative: Gill Jennings & Every LLP
(86) International application number: PCT/CN2024/083597
(87) International publication number: WO 2024/199184

(57) **Abstract**

This application relates to a communication method and apparatus, and a computer-readable storage medium. According to the technical solutions provided herein, a core network device generates a quality of service QoS configuration of a traffic flow, and sends the QoS configuration to a communication apparatus. The traffic flow is associated with an AI model. The QoS configuration includes information associated with the AI model. The information indicates at least one of the following: a requirement, in terms of computing power, of training or inference of the AI model; or a requirement, in terms of a latency, of training or inference of the AI model. Then, the communication apparatus may perform transmission of the traffic flow based on the QoS configuration. In this way, characteristic information of AI traffic can be fully taken into account to perform QoS configuration, and transmission of an AI traffic flow can be performed based on the QoS configuration, so that a requirement of the AI traffic can be more adequately satisfied and user experience of the AI traffic can be improved.

## Description

### TECHNICAL FIELD

This application relates to the communication field, and in particular, to a communication method and apparatus for quality of service (quality of service, QoS) configuration, and a computer-readable storage medium.

### BACKGROUND

With development of artificial intelligence (artificial intelligence, AI) technologies, there is an increasing need for transmission of Al-related traffic (also referred to as AI traffic in this specification for convenience) in mobile communication networks. Generally, transmission of traffic is performed in a form of QoS flows. However, current QoS configuration mechanisms for QoS flows do not take into account characteristic information of the AI traffic, and consequently cannot adequately satisfy a requirement of the AI traffic.

### SUMMARY

Embodiments of this application provide a communication solution, to enhance a QoS configuration mechanism for AI traffic.

According to a first aspect of embodiments of this application, a communication method is provided. The method may be performed at a communication apparatus for QoS flow configuration. The method includes: generating a QoS configuration of a traffic flow, where the traffic flow is associated with an AI model, the QoS configuration includes information associated with the AI model, and the information associated with the AI model indicates at least one of the following: a requirement, in terms of computing power, of training or inference of the AI model; or a requirement, in terms of a latency, of training or inference of the AI model; and sending the QoS configuration to a communication apparatus. In this way, characteristic information of AI traffic is fully taken into account to perform QoS configuration, thereby satisfying a requirement of the AI traffic and improving user experience of the AI traffic.

In some embodiments, the method further includes: receiving a QoS requirement of the traffic flow; and determining, based on the QoS requirement, the information associated with the AI model. In this way, the characteristic information of the AI traffic can be determined based on a QoS requirement of the AI traffic, thereby facilitating QoS configuration.

In some embodiments, the communication apparatus is a core network device having a user plane function, the QoS configuration includes a packet detection rule (packet detection rule, PDR), and the PDR includes the information associated with the AI model. As a result, QoS configuration on a core network side can be implemented, so that the characteristic information of the AI traffic can be taken into account.

In some embodiments, the communication apparatus is an access network device, the QoS configuration includes a QoS profile, and the QoS profile includes the information associated with the AI model. As a result, QoS configuration on an access network side can be implemented, so that the characteristic information of the AI traffic can be taken into account.

In some embodiments, the communication apparatus is a terminal device, the QoS configuration includes a QoS rule, and the QoS rule includes the information associated with the AI model. As a result, QoS configuration on a terminal side can be implemented, so that the characteristic information of the AI traffic can be taken into account.

In some embodiments, the information associated with the AI model further indicates at least one of the following: a user experience requirement of the traffic flow; an index of the AI model; or a partitioning point of the AI model. As a result, the characteristic information of the AI traffic can be further enhanced, so that the QoS configuration can more adequately satisfy the requirement of the AI traffic and further improve the user experience of the AI traffic.

According to a second aspect of embodiments of this application, a communication method is provided. The method may be performed at a communication apparatus for QoS flow transmission. The method includes: receiving a QoS configuration of a traffic flow, where the traffic flow is associated with an AI model, the QoS configuration includes information associated with the AI model, and the information associated with the AI model indicates at least one of the following: a requirement, in terms of computing power, of training or inference of the AI model; or a requirement, in terms of a latency, of training or inference of the AI model; and performing transmission of the traffic flow based on the QoS configuration. In this way, transmission of an AI traffic flow can be performed based on a QoS configuration that fully takes into account characteristic information of AI traffic, thereby satisfying a requirement of the AI traffic and improving user experience of the AI traffic.

In some embodiments, the method is performed at a communication apparatus, the communication apparatus is a core network device having a user plane function, the QoS configuration includes a PDR, and the PDR includes the information associated with the AI model. As a result, a core network side can take into account the characteristic information of the AI traffic to perform transmission of the AI traffic flow.

In some embodiments, the method is performed at a communication apparatus, the communication apparatus is an access network device, the QoS configuration includes a QoS profile, and the QoS profile includes the information associated with the AI model. As a result, an access network side can take into account the characteristic information of the AI traffic to perform transmission of the AI traffic flow.

In some embodiments, the method is performed at a communication apparatus, the communication apparatus is a terminal device, the QoS configuration includes a QoS rule, and the QoS rule includes the information associated with the AI model. As a result, a terminal side can take into account the characteristic information of the AI traffic to perform transmission of the AI traffic flow.

In some embodiments, the information associated with the AI model further indicates at least one of the following: a user experience requirement of the traffic flow; an index of the AI model; or a partitioning point of the AI model. As a result, the characteristic information of the AI traffic can be further enhanced, so that the QoS configuration can more adequately satisfy the requirement of the AI traffic and further improve the user experience of the AI traffic.

According to a third aspect of embodiments of this application, a communication apparatus is provided. The communication apparatus may be a communication apparatus for QoS flow configuration. The communication apparatus includes: a processing module, configured to generate a QoS configuration of a traffic flow, where the traffic flow is associated with an AI model, the QoS configuration includes information associated with the AI model, and the information associated with the AI model indicates at least one of the following: a requirement, in terms of computing power, of training or inference of the AI model; or a requirement, in terms of a latency, of training or inference of the AI model; and an interface module, configured to send the QoS configuration to another communication apparatus. In this way, a communication apparatus that can fully take into account characteristic information of AI traffic to perform QoS configuration can be implemented.

In some embodiments, the interface module is further configured to receive a QoS requirement of the traffic flow; and the processing module is further configured to determine, based on the QoS requirement, the information associated with the AI model. In this way, the characteristic information of the AI traffic can be determined based on a QoS requirement of the AI traffic, thereby facilitating QoS configuration.

In some embodiments, the another communication apparatus is a core network device having a user plane function, the QoS configuration includes a PDR, and the PDR includes the information associated with the AI model. As a result, QoS configuration on a core network side can be implemented, so that the characteristic information of the AI traffic can be taken into account.

In some embodiments, the another communication apparatus is an access network device, the QoS configuration includes a QoS profile, and the QoS profile includes the information associated with the AI model. As a result, QoS configuration on an access network side can be implemented, so that the characteristic information of the AI traffic can be taken into account.

In some embodiments, the another communication apparatus is a terminal device, the QoS configuration includes a QoS rule, and the QoS rule includes the information associated with the AI model. As a result, QoS configuration on a terminal side can be implemented, so that the characteristic information of the AI traffic can be taken into account.

In some embodiments, the information associated with the AI model further indicates at least one of the following: a user experience requirement of the traffic flow; an index of the AI model; or a partitioning point of the AI model. As a result, the characteristic information of the AI traffic can be further enhanced, so that the QoS configuration can more adequately satisfy the requirement of the AI traffic and further improve the user experience of the AI traffic.

According to a fourth aspect of embodiments of this application, a communication apparatus is provided. The communication apparatus may be a communication apparatus for QoS flow transmission. The communication apparatus includes: an interface module, configured to receive a QoS configuration of a traffic flow, where the traffic flow is associated with an AI model, the QoS configuration includes information associated with the AI model, and the information associated with the AI model indicates at least one of the following: a requirement, in terms of computing power, of training or inference of the AI model; or a requirement, in terms of a latency, of training or inference of the AI model; and a processing module, configured to control, based on the QoS configuration, the interface module to perform transmission of the traffic flow. In this way, a communication apparatus that can fully take into account characteristic information of AI traffic to perform transmission of an AI traffic flow can be implemented.

In some embodiments, the communication apparatus is a core network device having a user plane function, the QoS configuration includes a PDR, and the PDR includes the information associated with the AI model. In this way, a core network device that can fully take into account characteristic information of AI traffic to perform transmission of an AI traffic flow can be implemented.

In some embodiments, the communication apparatus is an access network device, the QoS configuration includes a QoS profile, and the QoS profile includes the information associated with the AI model. In this way, an access network device that can fully take into account characteristic information of AI traffic to perform transmission of an AI traffic flow can be implemented.

In some embodiments, the communication apparatus is a terminal device, the QoS configuration includes a QoS rule, and the QoS rule includes the information associated with the AI model. In this way, a terminal device that can fully take into account characteristic information of AI traffic to perform transmission of an AI traffic flow can be implemented.

In some embodiments, the information associated with the AI model further indicates at least one of the following: a user experience requirement of the traffic flow; an index of the AI model; or a partitioning point of the AI model. As a result, the characteristic information of the AI traffic can be further enhanced, so that the QoS configuration can more adequately satisfy the requirement of the AI traffic and further improve the user experience of the AI traffic.

According to a fifth aspect of embodiments of this application, a communication apparatus is provided. The communication apparatus includes: a processor, where the processor is coupled to a memory, the memory stores computer program code, and the memory and the computer program code are configured to, together with the processor, enable the communication apparatus to perform the method according to the first aspect or the method according to the second aspect.

According to a sixth aspect of embodiments of this application, a communication system is provided. The communication system includes the communication apparatus according to the third aspect and the communication apparatus according to the fourth aspect.

According to a seventh aspect of embodiments of this application, a chip is provided, including a processor and a front-end circuit, where the processor and the front-end circuit operate together to perform the method according to the first aspect or the method according to the second aspect.

According to an eighth aspect of embodiments of this application, a computer-readable storage medium is provided. The computer-readable storage medium includes machine-executable instructions. When the machine-executable instructions are executed by a device, the device is enabled to perform the method according to the first aspect or the method according to the second aspect.

According to a ninth aspect of embodiments of this application, a computer program product is provided. The computer program product includes computer program code. When the computer program code is executed by a device, the device is enabled to perform the method according to the first aspect or the method according to the second aspect.

It may be understood from the following descriptions of example embodiments that, according to the technical solutions provided herein, characteristic information of AI traffic can be fully taken into account to perform QoS configuration. As a result, a requirement of the AI traffic can be more adequately satisfied, and user experience of the AI traffic can be improved.

It should be understood that the content described in the summary is not intended to limit key or important features of embodiments of this application or limit the scope of this application. Other features of this application are easily understood by using the following descriptions.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of an example communication network in which embodiments of this application can be implemented;
FIG. 2A is a diagram of a protocol data unit (protocol data unit, PDU) session establishment process in which embodiments of this application can be implemented;
FIG. 2B is a diagram of a QoS flow configuration and transmission process in which embodiments of this application can be implemented;
FIG. 3 is a diagram of an example communication process according to an embodiment of this application;
FIG. 4 is a diagram of AI model partitioning in which embodiments of this application can be implemented;
FIG. 5 is a flowchart of a communication method performed at a communication apparatus for QoS flow configuration according to an embodiment of this application;
FIG. 6 is a flowchart of a communication method performed at a communication apparatus for QoS flow transmission according to an embodiment of this application;
FIG. 7 is a block diagram of an example communication apparatus for QoS flow configuration according to an embodiment of this application;
FIG. 8 is a block diagram of an example communication apparatus for QoS flow transmission according to an embodiment of this application; and
FIG. 9 is a simplified block diagram of a device suitable for implementing embodiments of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that the accompanying drawings and embodiments of this application are only used as examples, but are not intended to limit the protection scope of this application.

As used herein, the term "including" and variants thereof indicate open inclusion, that is, "including but not limited to". The term "based on" indicates "at least partially based on". The term "one embodiment" indicates "at least one embodiment". The term "another embodiment" indicates "at least one another embodiment". Definitions of other terms are provided in the following description.

It should be understood that, although the terms "first", "second", and the like may be used to describe various elements in this specification, the elements should not be limited by these terms. These terms are used only to distinguish one element from another. For example, a first element may be referred to as a second element, and similarly the second element may be referred to as the first element without departing from the scope of the embodiments. The term "and/or" used in this specification includes any and all combinations of one or more of the listed terms.

The term "circuit" used herein refers to one or more of the following:
(a) hardware circuit implementation only (such as implementations of analog and/or digital circuits only);
(b) a combination of a hardware circuit and software, such as (if applicable): (i) a combination of analog and/or digital hardware circuits and software/firmware, and (ii) any part of a hardware processor and software (including a digital signal processor, software, and a memory that work together to enable an apparatus to perform various functions); and
(c) a hardware circuit and/or a processor, such as a microprocessor or a part of a microprocessor, which requires software (such as firmware) for operation, but may not have software when software is not required for operation.

The definition of a circuit is applicable to all scenarios of use of the term in this application (including any claim). As another example, the term "circuit" used herein also covers implementations of only a hardware circuit or processor (or a plurality of processors), a part of a hardware circuit or processor, or software or firmware accompanying a hardware circuit or processor. For example, if applicable to a particular claim element, the term "circuit" further covers a baseband integrated circuit, a processor integrated circuit, or a similar integrated circuit in another computing device.

As used in this specification, the term "terminal device" is any device that has a wireless or wired communication capability. Examples of the terminal device include but are limited to customer premises equipment (customer premise equipment, CPE), user equipment (user equipment, UE), a personal computer, a desktop computer, a mobile phone, a cellular phone, a smartphone, a personal digital assistant (personal digital assistant, PDA), a portable computer, a tablet, a wearable device, an IoT device, a machine type communication (machine type communication, MTC) device, a vehicle-mounted device for vehicle-to-everything (vehicle-to-everything, V2X) (X refers to a pedestrian, a vehicle, or an infrastructure/network) communication, an image capture device such as a digital camera, a game device, a music storage and playback device, or an internet device capable of wireless or wired internet access and browsing.

In addition, the term "access network device" may be a node in a radio access network (radio access network, RAN), and is a device that can provide or host a cell or coverage area in which a terminal device can perform communication. Examples of the access network device include but are not limited to a NodeB (NodeB or NB), an evolved NodeB (eNodeB or eNB), a next generation NodeB (gNB), a transmission reception point (transmission reception point, TRP), a remote radio unit (remote radio unit, RRU), a radio head (radio head, RH), a remote radio head (remote radio head, RRH), or a low power node such as a femto node or a pico node.

In addition, the term "core network device" may be a node in a core network (core network, CN), and may have a control plane function, a user plane function, or both. Examples of the core network device include but are not limited to a session management function (session management function, SMF), an access management function (access management function, AMF), a policy control function (policy control function, PCF), a user plane function (user plane function, UPF), a network exposure function (network exposure function, NEF), an application function (application function, AF), or the like.

In this application, "sending information to... (a terminal)" may be understood as that a destination end of the information is the terminal, and may include directly or indirectly sending information to the terminal. "Receiving information from... (a terminal)" may be understood as that a source end of the information is the terminal, and may include directly or indirectly receiving information from the terminal. Necessary processing, for example, a format change may be performed on information between the source end from which the information is sent and the destination end to which the information is sent. However, the destination end may understand valid information from the source end. Similar descriptions in this application may be understood similarly, and details are not described herein again.

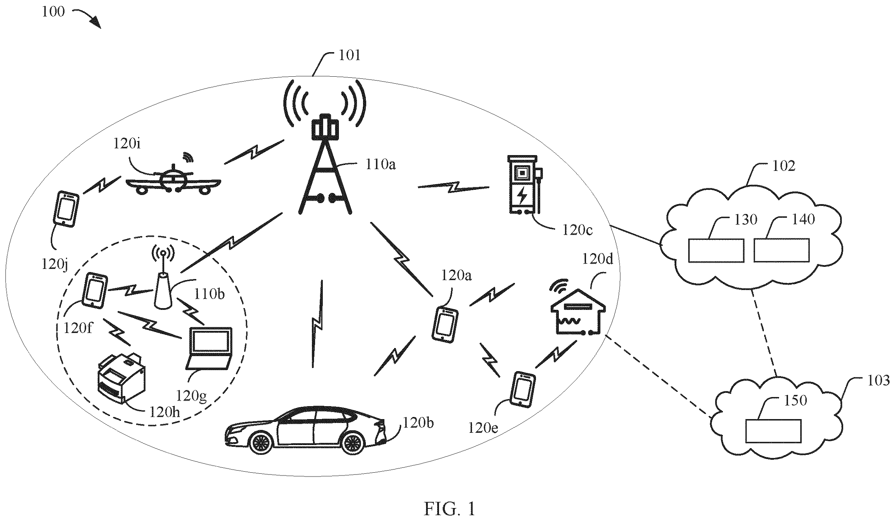

FIG. 1 is a diagram of a possible and non-limiting system. As shown in FIG. 1, a communication system 100 includes a radio access network (radio access network, RAN) 101 and a core network (core network, CN) 102. Optionally, the communication system 100 may further include the Internet 103. The RAN 101 includes at least one RAN node (for example, 110a and 110b in FIG. 1, which are collectively referred to as 110) and at least one terminal (for example, 120a to 120j in FIG. 1, which are collectively referred to as 120). The RAN 101 may further include other RAN nodes, for example, a wireless relay device and/or a wireless backhaul device (not shown in FIG. 1). The terminal 120 is connected to the RAN node 110 in a wireless manner. The RAN node 110 is connected to the core network 102 in a wireless or wired manner. A core network device in the core network 102 and the RAN node 110 in the RAN 101 may be different physical devices, or may be a same physical device that integrates core network logical functions and radio access network logical functions, or one device may integrate some of the core network logical functions and some of the radio access network logical functions. The terminals may be connected to each other in a wired or wireless manner and the RAN nodes may be connected to each other in a wired or wireless manner. FIG. 1 is merely a diagram. The communication system may further include other network devices, for example, a relay device and a backhaul device, which are not shown in FIG. 1.

As shown in FIG. 1, the core network device in the core network 102 may include a core network device 130 having a control plane function and a core network device 140 having a user plane function. In some embodiments, the core network device 130 may include one or more network elements, for example, an NEF, a PCF, an SMF, and an AMF. In some embodiments, the core network device 140 may also include one or more network elements, for example, a UPF.

As shown in FIG. 1, the Internet 103 may include a server 150, for example, an application server. It should be understood that the Internet 103 may include more servers, and the servers may provide various services.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A specific technology and a specific device form that are used by the RAN node are not limited in embodiments of this application.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

It should be understood that a quantity of devices in FIG. 1 are provided for the purpose of description, and does not imply any limitation to this application. The communication system 100 may include any appropriate quantity of access network devices and/or core network devices and/or terminal devices that are suitable for implementing this application. In addition, the communication system 100 may include more additional components that are not shown, or some shown components may be omitted. This is not limited in embodiments of this application. An implementation of the communication system 100 is also not limited to the specific examples described above, but the communication system 100 may be implemented in any appropriate manner.

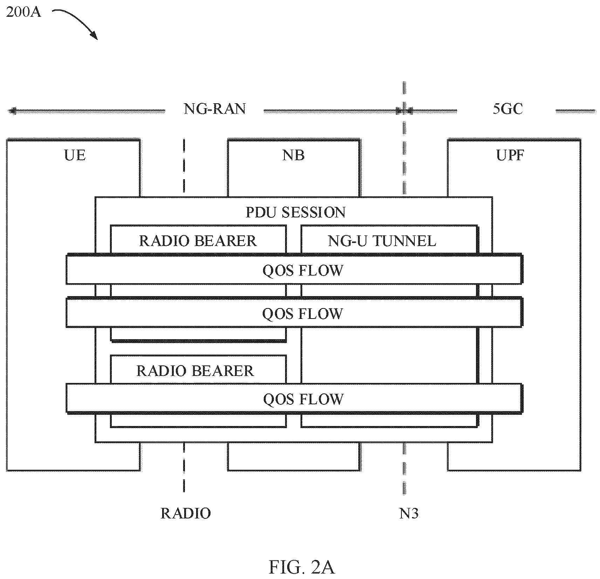

FIG. 2A is a diagram 200A of a protocol data unit (protocol data unit, PDU) session establishment process in which embodiments of this application can be implemented. For convenience, FIG. 2A is described herein with reference to the example in FIG. 1. As shown in the diagram 200A, one or more PDU sessions may be established between the terminal device 120, the access network device 110, and the core network device 140. In a PDU session, a QoS flow is a smallest granularity for differentiating QoS. A QoS flow identifier (QoS flow identifier, QFI) identifies a QoS flow, and a QFI is unique in a PDU session. In other words, a PDU session may have a plurality of QoS flows (for example, a maximum of 64 QoS flows), but each QoS flow has a different QFI. In a PDU session, user plane traffic flows that have a same QFI use a same traffic forwarding treatment manner (for example, scheduling). In terms of a configuration granularity, one PDU session may correspond to a plurality of radio bearers (radio bearers, RBs), traffic on a same RB may have different service levels, and one RB may include a plurality of QoS flows. QoS configuration is at a QoS flow level. In the context of embodiments of this application, the term "QoS flow" and the term "traffic flow" may be used interchangeably.

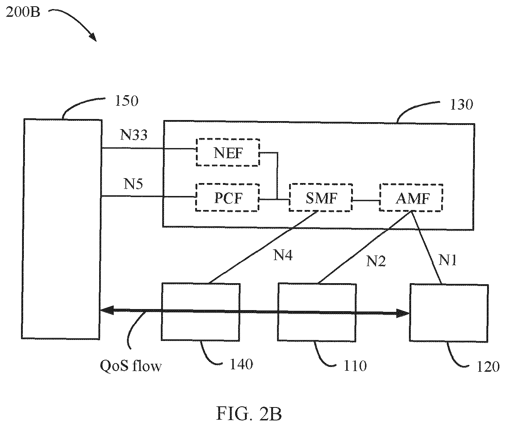

FIG. 2B is a diagram 200B of a QoS flow configuration and transmission process in which embodiments of this application can be implemented. For convenience, FIG. 2B is described herein with reference to the example in FIG. 1. As shown in the diagram 200B, the server 150 may provide a QoS requirement of traffic to the core network device 130. The core network device 130 may perform QoS configuration for the core network device 140, the access network device 110, and the terminal device 120 according to the QoS requirement. Then, the core network device 140, the access network device 110, and the terminal device 120 may perform QoS flow transmission based on the QoS configuration.

For example, the server 150 may communicate with the NEF of the core network device 130 through an N33 interface and communicate with the PCF of the core network device 130 through an N5 interface, to transfer the QoS requirement of the traffic. The NEF and the PCF of the core network device 130 may transfer the QoS requirement of the traffic to the SMF of the core network device 130. The SMF may provide, for the UPF of the core network device 140 through an N4 interface, a packet detection rule (packet detection rule, PDR) as a QoS configuration. The SMF may provide, for the access network device 110 through an N2 interface of the AMF of the core network device 130, a QoS profile as a QoS configuration. The SMF may provide, for the terminal device 120 through an N1 interface of the AMF of the core network device 130, a QoS rule as a QoS configuration.

Currently, in the QoS configuration, only characteristic information of data transmission such as a latency, reliability, and a data volume is taken into account, while characteristic information unique to AI traffic data is not taken into account. Consequently, a requirement of AI traffic in a network cannot be adequately satisfied, resulting in relatively poor user experience of the AI traffic.

In view of this, embodiments of this application provide a QoS configuration solution, to overcome the foregoing problem and other potential problems. In this solution, a QoS configuration of a traffic flow associated with an AI model (also referred to as an AI traffic flow in this specification for convenience) is generated, where the QoS configuration includes information associated with the AI model, and the information indicates at least one of the following: a requirement, in terms of computing power, of training or inference of the AI model; or a requirement, in terms of a latency, of training or inference of the AI model. Then, the QoS configuration is sent to a communication apparatus; and the communication apparatus performs transmission of the traffic flow based on the QoS configuration.

In this way, characteristic information unique to AI traffic data can be taken into account to perform QoS configuration, thereby more adequately satisfying a traffic requirement of AI traffic in a network and improving user experience of the AI traffic.

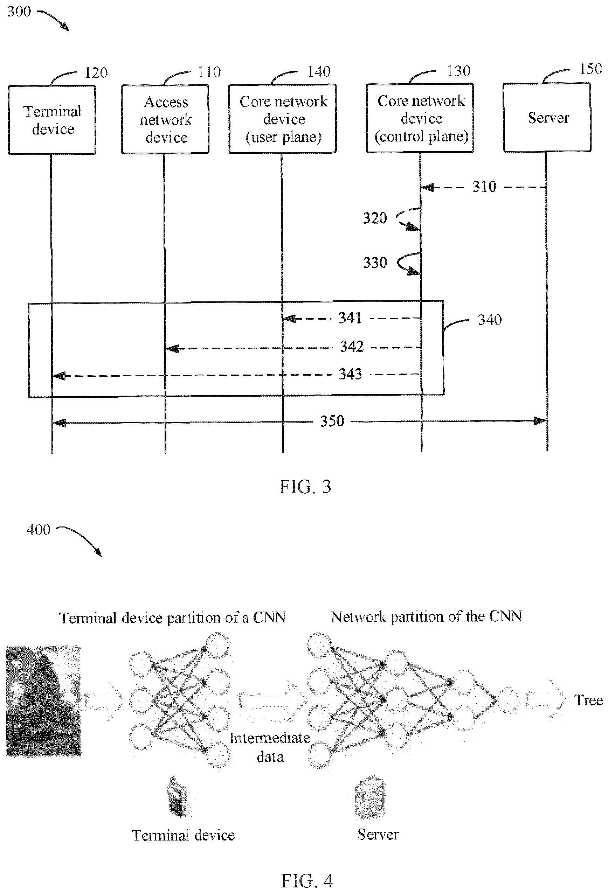

For ease of understanding, the following provides more detailed descriptions with reference to FIG. 3 and FIG. 4.

FIG. 3 is a diagram of an example communication process 300 according to an embodiment of this application. For convenience, FIG. 3 is described herein with reference to the example in FIG. 1. The process 300 may involve the access network device 110, the terminal device 120, the core network device 130, the core network device 140, and the server 150. It should be understood that this is merely an example, and the process in FIG. 3 may involve other appropriate communication apparatuses for QoS flow configuration and/or transmission. In addition, the process in FIG. 3 may include other additional steps that are not shown, or some shown steps may be omitted. The scope of this application is not limited thereto.

As shown in FIG. 3, the server 150 may send 310 a QoS requirement of an AI traffic flow to a core network device having a control plane function (for example, the core network device 130). In some embodiments, the server 150 may send a service request message including the QoS requirement to the core network device 130. In some embodiments, the server 150 may send a PDU session establishment request message including the QoS requirement to the core network device 130. It should be understood that any other appropriate message is also feasible.

Refer to FIG. 3. The core network device 130 may determine 320, based on the QoS requirement, information associated with an AI model. In some embodiments, the QoS requirement may include the information associated with the AI model. In some embodiments, the QoS requirement may include derivation information for deriving the information associated with the AI model.

In some embodiments, the information associated with the AI model may indicate a requirement in terms of computing power (also referred to as a computing power requirement in this specification for convenience) of training or inference of the AI model. In some embodiments, the computing power requirement may be a parameter value indicating minimum computing power required for AI training/inference of data of the QoS flow. For example, a larger parameter value may indicate a higher requirement for computing power. In some embodiments, the computing power requirement may alternatively be a range of values, indicating a range of computing power required for AI training/inference of data of the QoS flow.

In some embodiments, if a network provides computing power, the computing power requirement may be measured in operations per second (operations per second, OPS), floating-point operations per second (floating-point operations per second, Flops/s), or hash collisions per second (hash collisions per second, hash/s). For example, X OPS indicates "X operations per second", X flops/s indicates "X floating-point operations per second", and X hash/s indicates "X hash collisions per second". In some embodiments, if a terminal or another device provides computing power, the computing power requirement may be a relative value. For example, computing power of the terminal is N, and the computing power requirement is X, which indicates that the minimum computing power required for AI training/inference of the data of the QoS flow may be X*N.

In some embodiments, the information associated with the AI model may indicate a requirement in terms of a latency (also referred to as a latency requirement in this specification for convenience) of training or inference of the AI model. In some embodiments, the latency requirement may be a parameter value indicating a maximum latency for AI training/inference of data of the QoS flow. For example, a smaller parameter value may indicate a higher speed of AI training/inference and a higher requirement for computing power. In some embodiments, the latency requirement may alternatively be a range of values, indicating a range of latencies for AI training/inference of data of the QoS flow. In some embodiments, the latency requirement may be measured in milliseconds.

In some embodiments, the information associated with the AI model may indicate a requirement for user experience (also referred to as a user experience requirement in this specification for convenience) of the traffic flow. In some embodiments, the user experience requirement may be a parameter value indicating a user experience requirement of AI traffic corresponding to data of the QoS flow. For example, a larger parameter value may indicate a higher requirement for experience of the traffic. In some embodiments, the user experience requirement may be indicated by a mean opinion score (mean opinion score, MOS).

In some embodiments, the information associated with the AI model may indicate an index of the AI model (namely, a number of the AI model).

In some embodiments, the information associated with the AI model may indicate a partitioning point of the AI model. FIG. 4 is a diagram 400 of AI model partitioning in which embodiments of this application can be implemented. As shown in FIG. 4, an AI model (namely, a convolutional neural network (convolutional neural network, CNN)) may be divided into many layers, with significant differences in parameter data and computation amount across different layers. The AI model may be partitioned and then computation may be separately performed on different nodes, to reduce an amount of data for transmission or a computation amount. In this case, a partitioning point of the AI model may indicate to partition the AI model at a specific layer.

It should be understood that a combination of the foregoing information associated with the AI model is also feasible. Certainly, other appropriate information associated with the AI model is also feasible.

Still refer to FIG. 3. The core network device 130 may generate 330 a QoS configuration of the AI traffic flow, where the QoS configuration includes the information associated with the AI model. In some embodiments, the core network device 130 may generate a PDR, where the PDR includes the information associated with the AI model. In some embodiments, the core network device 130 may generate a QoS profile, where the QoS profile includes the information associated with the AI model. In some embodiments, the core network device 130 may generate a QoS rule, where the QoS rule includes the information associated with the AI model.

Refer to FIG. 3. The core network device 130 may send 340 the QoS configuration to a communication apparatus. In some embodiments, the communication apparatus may be a core network device having a user plane function (for example, the core network device 140). In this case, the core network device 130 may send 341, to the core network device 140, the PDR including the information associated with the AI model. For example, the PDR may include the following content:

For an IPv4, IPv6, or IPv4v6 PDU session type, detection information includes:
- core network tunnel information (CN tunnel information): a core network address of an N3/N9 tunnel corresponding to a PDU session;
- a network instance (network instance): information identifying a domain, used on a UPF side for traffic detection and routing;
- a QFI: identifies a QoS flow;
- an Internet protocol (Internet protocol, IP) packet filter set (IP packet filter set): includes a series of parameters related to IP packet filtering;
- an application identifier (application identifier): the application identifier is an index to a set of application detection rules configured in the UPF; and
- information associated with an AI model.

For an Ethernet PDU session, detection information includes:
- core network tunnel information: a core network address of an N3/N9 tunnel corresponding to a PDU session;
- a network instance: information identifying a domain, used on a UPF side for traffic detection and routing;
- a QFI: identifies a QoS flow;
- an Ethernet packet filter set: includes a series of parameters related to Ethernet packet filtering; and
- information associated with an AI model.

Still refer to FIG. 3. In some embodiments, the communication apparatus may be an access network device (for example, the access network device 110). In this case, the core network device 130 may send 342, to the access network device 110, the QoS profile including the information associated with the AI model. For example, in the QoS profile, whether a QoS flow is a "guaranteed bit rate (guaranteed bit rate, GBR)" QoS flow or a "non-guaranteed bit rate (non-guaranteed bit rate, Non-GBR)" QoS flow depends on a QoS configuration of the QoS flow, and a QoS parameter included in a QoS configuration of a QoS flow is as follows:
- QoS parameters included in a QoS configuration of each QoS flow: a 5G QoS identifier (5G quality identifier, 5QI), and an allocation and retention priority (allocation and retention priority, ARP);
- a parameter that may be further included in a QoS configuration of each non-GBR QoS flow: a reflective QoS attribute (reflective QoS attribute, RQA);
- parameters further included in a QoS configuration of each GBR QoS flow: a guaranteed flow bit rate (guaranteed flow bit rate, GFBR), and a maximum flow bit rate (maximum flow bit rate, MFBR).
- parameters that may be further included in the QoS configuration of each GBR QoS flow: notification control, and a maximum packet loss rate; and
- a parameter that may be further included in the QoS configuration of each non-GBR QoS flow: information associated with an AI model.

In some embodiments, in the QoS profile, the 5QI specifies a 5G QoS-related characteristic, and the 5G QoS-related characteristic may include attributes shown in Table 1.

**Table 1**

| Resource type | GBR, delay-critical GBR (Delay-critical GBR), or non-GBR |
|---|---|
| Priority level | Indicates a priority in scheduling resources among 5G QoS flows. The parameter is used to distinguish QoS flows of a UE or QoS flows of different terminals. A smaller parameter value indicates a higher priority. |
| Packet delay budget (packet delay budget, PDB) | The PDB defines an upper bound for a delay of data packet transmission between a UE and an anchor NPF. |
| Resource type | GBR, delay-critical GBR (Delay-critical GBR), or non-GBR |
| Priority level | Indicates a priority in scheduling resources among 5G QoS flows. The parameter is used to distinguish QoS flows of a UE or QoS flows of different terminals. A smaller parameter value indicates a higher priority. |
| Packet error rate (packet error rate, PER) | The packet error rate defines an upper bound, to be specific, an upper bound for a rate of data packets that have been processed by a link layer (for example, an RLC layer in a 3GPP access network) of a sender but are not delivered by a corresponding receiver to an upper layer (for example, a PDCP layer in a 3GPP access network). A purpose of the PER parameter is to allow for configuration of appropriate link layer parameters (for example, RLC and HARQ configurations in a 3GPP access network) by a network. |
| Averaging window | The averaging window is defined for a GBR QoS flow and is used for a related network element to calculate a GFBR and an MFBR. |
| Maximum data burst volume (maximum data burst volume, MDBV) | Each GBR QoS flow with a delay-critical resource type shall be associated with an MDBV. The MDBV indicates a maximum amount of data that a 5G-AN is required to serve within a period of 5G-AN PDB. |
| Computing power requirement of AI training/inference | Indicates minimum computing power required for AI training/inference of data of a QoS flow. A larger parameter value indicates a higher requirement for computing power. The requirement may alternatively be a range of values, indicating a range of computing power required for AI training/inference of data of a QoS flow. Generally, if a network provides computing power, the computing power requirement may be measured in OPS, flops/s, or hash/s, where X OPS indicates "X operations per second", X flops/s indicates "X floating-point operations per second", and X hash/s indicates "X hash collisions per second". |
| | If a terminal or another device provides computing power, the computing power requirement may be a relative value. For example, computing power of the terminal is N, and the computing power requirement is X, which indicates that the minimum |
| Resource type | GBR, delay-critical GBR (Delay-critical GBR), or non-GBR |
| Priority level | Indicates a priority in scheduling resources among 5G QoS flows. The parameter is used to distinguish QoS flows of a UE or QoS flows of different terminals. A smaller parameter value indicates a higher priority. |
| | computing power required for AI training/inference of the data of the QoS flow is X*N. |
| Latency requirement of AI training/inference | Indicates a maximum latency for AI training/inference of data of a QoS flow. A smaller parameter value indicates a higher speed of AI training/inference and a higher requirement for computing power. The requirement may alternatively be a range of values, indicating a range of latencies for AI training/inference of data of a QoS flow. Generally, a latency may be measured in milliseconds. |
| User experience requirement of AI traffic | Indicates a user experience requirement of AI traffic corresponding to data of a QoS flow. A larger value indicates a higher requirement for experience of the traffic. The user experience requirement may be indicated by a mean opinion score (Mean Opinion Score, MOS). |

Still refer to FIG. 3. In some embodiments, the communication apparatus may be a terminal device (for example, the terminal device 120). In this case, the core network device 130 may send 343, to the terminal device 120, the QoS rule including the information associated with the AI model. For example, the QoS rule may have the following characteristics:
- A QoS rule includes indication information indicating whether the QoS rule is a default QoS rule, a QoS rule identifier, a QFI of an associated QoS flow, a packet filter set (a filter list, which is optional), and precedence:
   - indication information indicating whether the QoS rule is a default QoS rule;
   - a QoS rule identifier (QoS rule identifier, QRI): information identifying a domain, used on a UPF side for traffic detection and routing;
   - a QFI: identifies a QoS flow;
   - optionally, a packet filter set;
   - a precedence value (precedence value): The precedence value (precedence value) of the QoS rule is used to determine an evaluation order of QoS rules, and the QoS rules are evaluated in ascending order of precedence values; and
   - information associated with an AI model.
- One QoS flow may have a plurality of QoS rules.
- A default QoS rule is configured for each PDU session, and the default QoS rule is associated with one QoS flow.

Still refer to FIG. 3. The terminal device 120, the access network device 110, and the core network device 140 may perform transmission 350 of the AI traffic flow, including sending and receiving of the AI traffic flow, based on the QoS configuration. In some embodiments, the core network device 140 and the access network device 110 may send an AI traffic flow from the server 150 to the terminal device 120 based on the QoS configuration (for example, based on the PDR and the QoS profile respectively), and the terminal device 120 may receive the AI traffic flow based on the QoS configuration (for example, the QoS rule). In some embodiments, the terminal device 120 may send an AI traffic flow through the access network device 110 and the core network device 140 based on the QoS configuration (for example, the QoS rule). The access network device 110 and the core network device 140 may send the AI traffic flow from the terminal device 120 to the server 150 based on the QoS configuration (for example, based on the PDR and the QoS profile respectively).

Up to this point, the communication process according to embodiments of this application is described. It should be understood that a sequence of the steps in the foregoing communication process 300 is merely intended for description, but is not intended to impose a limitation. In addition, these communication processes may include more steps that are not shown, or some shown steps may be omitted, but the communication processes are not limited to the foregoing descriptions.

According to the solutions in embodiments of this application, characteristic information of AI traffic can be fully taken into account to perform QoS configuration. As a result, a requirement of the AI traffic can be more adequately satisfied, and user experience of the AI traffic can be improved.

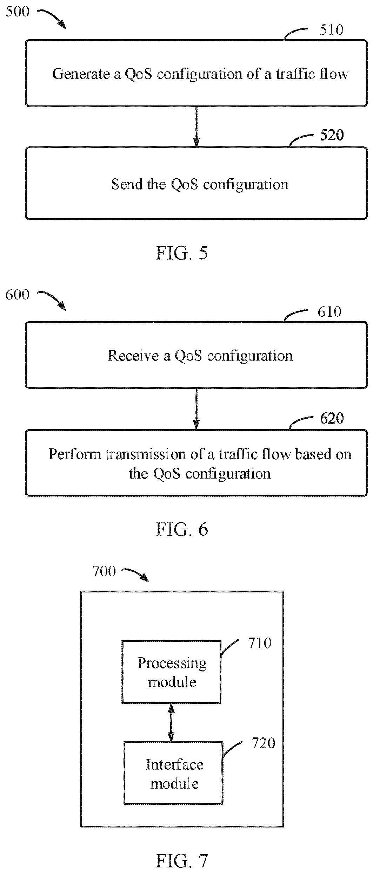

In correspondence with the foregoing communication process, embodiments of this application provide a communication method performed at a communication apparatus for QoS flow configuration and a communication method performed at a communication apparatus for QoS flow transmission. FIG. 5 is a flowchart of a communication method 500 performed at a communication apparatus for QoS flow configuration according to an embodiment of this application. The method 500 may be performed at the core network device 130 in FIG. 1. For convenience, the following provides descriptions with reference to the example in FIG. 1. It should be understood that the method in FIG. 5 may include other additional steps that are not shown, or some shown steps may be omitted. The scope of this application is not limited thereto.

As shown in FIG. 5, in block 510, the core network device 130 generates a QoS configuration of a traffic flow. The traffic flow is associated with an AI model. The QoS configuration includes information associated with the AI model. The information associated with the AI model indicates at least one of the following: a requirement, in terms of computing power, of training or inference of the AI model; or a requirement, in terms of a latency, of training or inference of the AI model. In this way, characteristic information of AI traffic can be fully taken into account to generate the QoS configuration.

In some embodiments, the information associated with the AI model may further indicate at least one of the following: a user experience requirement of the traffic flow; an index of the AI model; or a partitioning point of the AI model. As a result, the characteristic information of the AI traffic can be further enhanced, so that the QoS configuration can more adequately satisfy a requirement of the AI traffic and further improve user experience of the AI traffic.

In some embodiments, the core network device 130 may receive a QoS requirement of the traffic flow from the server 150 and determine the information associated with the AI model based on the QoS requirement. In this way, the characteristic information of the AI traffic can be determined based on a QoS requirement of the AI traffic, thereby facilitating QoS configuration.

In block 520, the core network device 130 sends the QoS configuration to a communication apparatus.

In some embodiments, the communication apparatus may be a core network device having a user plane function (for example, the core network device 140), the QoS configuration may include a packet detection rule PDR, and the PDR includes the information associated with the AI model. As a result, QoS configuration on a core network side can be implemented, so that the characteristic information of the AI traffic can be taken into account.

In some embodiments, the communication apparatus may be an access network device (for example, the access network device 110), the QoS configuration may include a QoS profile, and the QoS profile includes the information associated with the AI model. As a result, QoS configuration on an access network side can be implemented, so that the characteristic information of the AI traffic can be taken into account.

In some embodiments, the communication apparatus may be a terminal device (for example, the terminal device 120), the QoS configuration may include a QoS rule, and the QoS rule includes the information associated with the AI model. As a result, QoS configuration on a terminal side can be implemented, so that the characteristic information of the AI traffic can be taken into account.

According to the method in FIG. 5, the characteristic information of the AI traffic can be fully taken into account to perform QoS configuration, thereby satisfying the requirement of the AI traffic and improving the user experience of the AI traffic.

FIG. 6 is a flowchart of a communication method 600 performed at a communication apparatus for QoS flow transmission according to an embodiment of this application. The method 600 may be performed at the core network device 140, the terminal device 120, or the access network device 110 in FIG. 1. For convenience, the following provides descriptions with reference to the example in FIG. 1. It should be understood that the method in FIG. 6 may include other additional steps that are not shown, or some shown steps may be omitted. The scope of this application is not limited thereto.

As shown in FIG. 6, in block 610, the communication apparatus receives a QoS configuration of a traffic flow. The traffic flow is associated with an AI model. The QoS configuration includes information associated with the AI model. The information associated with the AI model indicates at least one of the following: a requirement, in terms of computing power, of training or inference of the AI model; or a requirement, in terms of a latency, of training or inference of the AI model.

In some embodiments, the information associated with the AI model may further indicate at least one of the following: a user experience requirement of the traffic flow; an index of the AI model; or a partitioning point of the AI model. As a result, characteristic information of AI traffic can be further enhanced, so that the QoS configuration can more adequately satisfy a requirement of the AI traffic and further improve user experience of the AI traffic.

In block 620, the communication apparatus performs transmission of the traffic flow based on the QoS configuration. In this way, transmission of the AI traffic flow can be performed based on the QoS configuration that fully takes into account the characteristic information of the AI traffic.

In some embodiments, the communication apparatus is a core network device having a user plane function (for example, the core network device 140), the QoS configuration includes a packet detection rule PDR, and the PDR includes the information associated with the AI model. As a result, a core network side can take into account the characteristic information of the AI traffic to perform transmission of the AI traffic flow.

In some embodiments, the communication apparatus is an access network device (for example, the access network device 110), the QoS configuration includes a QoS profile, and the QoS profile includes the information associated with the AI model. As a result, an access network side can take into account the characteristic information of the AI traffic to perform transmission of the AI traffic flow.

In some embodiments, the communication apparatus is a terminal device (for example, the terminal device 120), the QoS configuration includes a QoS rule, and the QoS rule includes the information associated with the AI model. As a result, a terminal side can take into account the characteristic information of the AI traffic to perform transmission of the AI traffic flow.

According to the method in FIG. 6, transmission of the AI traffic flow can be performed based on the QoS configuration that fully takes into account the characteristic information of the AI traffic, thereby satisfying the requirement of the AI traffic and improving the user experience of the AI traffic.

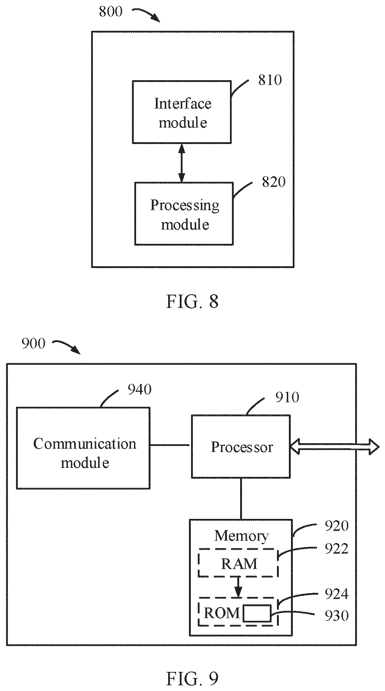

In correspondence with the foregoing methods, embodiments of this application further provide communication apparatuses that can perform these methods. The following provides descriptions with reference to FIG. 7 and FIG. 8.

FIG. 7 is a block diagram of an example communication apparatus 700 for QoS flow configuration according to an embodiment of this application. It should be understood that the block diagram of FIG. 7 is merely intended for description, but is not intended to impose a limitation. The device in FIG. 7 may include more or fewer components.

As shown in FIG. 7, the communication apparatus 700 may include a processing module 710 and an interface module 720. The processing module 710 is configured to generate a QoS configuration of a traffic flow. The traffic flow is associated with an AI model. The QoS configuration includes information associated with the AI model. The information associated with the AI model indicates at least one of the following: a requirement, in terms of computing power, of training or inference of the AI model; or a requirement, in terms of a latency, of training or inference of the AI model. The interface module 720 is configured to send the QoS configuration to another communication apparatus.

In some embodiments, the information associated with the AI model may further indicate at least one of the following: a user experience requirement of the traffic flow; an index of the AI model; or a partitioning point of the AI model. As a result, characteristic information of AI traffic can be further enhanced, so that the QoS configuration can more adequately satisfy a requirement of the AI traffic and further improve user experience of the AI traffic.

In some embodiments, the interface module 720 may be further configured to receive a QoS requirement of the traffic flow; and the processing module 710 may be further configured to determine, based on the QoS requirement, the information associated with the AI model. In this way, the characteristic information of the AI traffic can be determined based on a QoS requirement of the AI traffic, thereby facilitating QoS configuration.

In some embodiments, the another communication apparatus is a core network device having a user plane function, the QoS configuration includes a packet detection rule PDR, and the PDR includes the information associated with the AI model. As a result, QoS configuration on a core network side can be implemented, so that the characteristic information of the AI traffic can be taken into account.

In some embodiments, the another communication apparatus is an access network device, the QoS configuration includes a QoS profile, and the QoS profile includes the information associated with the AI model. As a result, QoS configuration on an access network side can be implemented, so that the characteristic information of the AI traffic can be taken into account.

In some embodiments, the another communication apparatus is a terminal device, the QoS configuration includes a QoS rule, and the QoS rule includes the information associated with the AI model. As a result, QoS configuration on a terminal side can be implemented, so that the characteristic information of the AI traffic can be taken into account.

In this way, a communication apparatus that can fully take into account the characteristic information of the AI traffic to perform QoS configuration can be implemented.

FIG. 8 is a block diagram of an example communication apparatus 800 for QoS flow transmission according to an embodiment of this application. It should be understood that the block diagram of FIG. 8 is merely intended for description, but is not intended to impose a limitation. The device in FIG. 8 may include more or fewer components.

As shown in FIG. 8, the communication apparatus 800 may include an interface module 810 and a processing module 820. The interface module 810 is configured to receive a QoS configuration of a traffic flow. The traffic flow is associated with an AI model. The QoS configuration includes information associated with the AI model. The information associated with the AI model indicates at least one of the following: a requirement, in terms of computing power, of training or inference of the AI model; or a requirement, in terms of a latency, of training or inference of the AI model. The processing module 820 is configured to control, based on the QoS configuration, the interface module to perform transmission of the traffic flow.

In some embodiments, the information associated with the AI model further indicates at least one of the following: a user experience requirement of the traffic flow; an index of the AI model; or a partitioning point of the AI model. As a result, characteristic information of AI traffic can be further enhanced, so that the QoS configuration can more adequately satisfy a requirement of the AI traffic and further improve user experience of the AI traffic.

In some embodiments, the communication apparatus is a core network device having a user plane function, the QoS configuration includes a packet detection rule PDR, and the PDR includes the information associated with the AI model. In this way, a core network device that can fully take into account the characteristic information of the AI traffic to perform transmission of the AI traffic flow can be implemented.

In some embodiments, the communication apparatus is an access network device, the QoS configuration includes a QoS profile, and the QoS profile includes the information associated with the AI model. In this way, an access network device that can fully take into account the characteristic information of the AI traffic to perform transmission of the AI traffic flow can be implemented.

In some embodiments, the communication apparatus is a terminal device, the QoS configuration includes a QoS rule, and the QoS rule includes the information associated with the AI model. In this way, a terminal device that can fully take into account the characteristic information of the AI traffic to perform transmission of the AI traffic flow can be implemented.

In this way, a communication apparatus that can fully take into account the characteristic information of the AI traffic to perform transmission of the AI traffic flow can be implemented.

FIG. 9 is a simplified block diagram of a device 900 suitable for implementing embodiments of this application. The device 900 may be provided to implement a network device or a terminal device, for example, any one of the access network device 110, the terminal device 120, the core network device 130, or the core network device 140 shown in FIG. 1. As shown in the figure, the device 900 includes one or more processors 910, one or more memories 920 coupled to the processor 910, and one or more communication modules 940 coupled to the processor 910.

In an embodiment of the network device, the communication module 940 is configured to perform duplex communication. The communication module 940 has a communication interface for the communication. The communication interface may be any interface necessary for communication with another network element.

In an embodiment of the terminal device, the communication module 940 includes an RIS. The RIS is only configured to reflect a signal and does not actively transmit a signal.

The processor 910 may be of any type suitable for a native technology network, and as a limiting example, may include one or more of the following: a general-purpose computer, a dedicated computer, a microprocessor, a digital signal processor, and a processor that is based on a multi-core processor architecture. The device 900 may have a plurality of processors, such as an application-specific integrated circuit chip, which belongs, in terms of time, to a clock synchronized with a main processor.

The memory 920 may include one or more non-volatile memories and one or more volatile memories. Examples of the non-volatile memory include but are not limited to a read-only memory (ROM) 924, an electrically programmable read-only memory (EPROM), a flash memory, a hard disk, a compact disc (CD), a digital video disc (DVD), and another magnetic storage apparatus and/or another optical storage apparatus. Examples of the volatile memory include but are not limited to a random access memory (RAM) 922 and another volatile memory that does not persist during power-off duration.

A computer program 930 includes computer-executable instructions executed by an associated processor 910. The program 930 may be stored in the ROM 920. The processor 910 may perform any suitable action and processing by loading the program 930 into the RAM 920.

Embodiments of this application may be implemented by using the program 930, to enable the device 900 to perform processing in this application as discussed with reference to FIG. 1 to FIG. 6. The device 900 may be corresponding to a functional module in the access network device 110, the terminal device 120, the core network device 130, or the core network device 140, which may be implemented by using software of the device 900. In other words, the functional module included in the network device 110 or the terminal device 120 is generated after the processor 910 of the device 900 reads program code stored in the memory 920. Embodiments of this application may alternatively be implemented by hardware or a combination of software and hardware.

In some embodiments, the program 930 may be tangibly included in a computer-readable medium, and the computer-readable medium may be included in the device 900 (for example, in the memory 920) or another storage device that can be accessed by the device 900. The program 930 may be loaded from the computer-readable medium to the RAM 922 for execution. The computer-readable medium may include any type of tangible non-volatile memory, for example, a ROM, an EPROM, a flash memory, a hard disk, a CD, or a DVD.

Generally, various example embodiments of this application may be implemented in hardware or a dedicated circuit, software, logic, or any combination thereof. Some aspects may be implemented in hardware, while other aspects may be implemented in firmware or software that may be executed by a controller, a microprocessor, or another computing device. When the aspects of embodiments of this application are illustrated or described as block diagrams or flowcharts, or represented by some other graphics, it is understood that the blocks, apparatuses, systems, technologies, or methods described herein may be implemented as non-limiting examples in hardware, software, firmware, dedicated circuits or logic, general-purpose hardware or controllers, or other computing devices, or some combination thereof. Examples of a hardware component that may be used to implement embodiments of this application include but are not limited to a field programmable gate array (FPGA), an application-specific integrated circuit (ASIC), an application-specific standard product (ASSP), a system-on-chip (SoC), a complex programmable logic device (CPLD), and the like.

As an example, embodiments of this application may be described in the context of machine-executable instructions. For example, the machine-executable instructions are included in a program module executed in a component on a target real or virtual processor. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instructions for the program module may be executed locally or within a distributed device. In the distributed device, the program module may be located in both a local storage medium and a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed completely on a computer, partially on a computer, as an independent software package, partially on a computer and partially on a remote computer, or completely on a remote computer or a server.

In the context of this application, the computer program code or related data may be carried in any appropriate carrier, so that the device, the apparatus, or the processor can perform various processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, although the operations are described in a particular order, this should not be understood as requiring the operations to be completed in the particular order shown or in a successive order, or performing all of the illustrated operations to obtain a desired result. In some cases, multitasking or parallel processing is beneficial. Likewise, although the foregoing discussion includes some specific implementation details, this should not be construed as a limitation on the scope of any invention or claim, but rather as a description of a specific embodiment that may be directed to a particular invention. Some features described in the context of separate embodiments in this specification may alternatively be implemented in combination in a single embodiment. Conversely, various features described in the context of a single embodiment may alternatively be implemented separately in a plurality of embodiments or in any suitable subcombination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A communication method, comprising:
generating a quality of service QoS configuration of a traffic flow, wherein the traffic flow is associated with an artificial intelligence AI model, the QoS configuration comprises information associated with the AI model, and the information associated with the AI model indicates at least one of the following:
a requirement, in terms of computing power, of training or inference of the AI model; or
a requirement, in terms of a latency, of training or inference of the AI model; and sending the QoS configuration to a communication apparatus.

2. The method according to claim 1, further comprising:
receiving a QoS requirement of the traffic flow; and
determining, based on the QoS requirement, the information associated with the AI model.

3. The method according to claim 1 or 2, wherein the communication apparatus is a core network device having a user plane function, the QoS configuration comprises a packet detection rule PDR, and the PDR comprises the information associated with the AI model.

4. The method according to claim 1 or 2, wherein the communication apparatus is an access network device, the QoS configuration comprises a QoS profile, and the QoS profile comprises the information associated with the AI model.

5. The method according to claim 1 or 2, wherein the communication apparatus is a terminal device, the QoS configuration comprises a QoS rule, and the QoS rule comprises the information associated with the AI model.

6. The method according to any one of claims 1 to 5, wherein the information associated with the AI model further indicates at least one of the following:
a user experience requirement of the traffic flow;
an index of the AI model; or
a partitioning point of the AI model.

7. A communication method, comprising:
receiving a quality of service QoS configuration of a traffic flow, wherein the traffic flow is associated with an artificial intelligence AI model, the QoS configuration comprises information associated with the AI model, and the information associated with the AI model indicates at least one of the following:
a requirement, in terms of computing power, of training or inference of the AI model; or
a requirement, in terms of a latency, of training or inference of the AI model; and performing transmission of the traffic flow based on the QoS configuration.

8. The method according to claim 7, wherein the method is performed at a communication apparatus, the communication apparatus is a core network device having a user plane function, the QoS configuration comprises a packet detection rule **PDR,** and the **PDR** comprises the information associated with the AI model.

9. The method according to claim 7, wherein the method is performed at a communication apparatus, the communication apparatus is an access network device, the QoS configuration comprises a QoS profile, and the QoS profile comprises the information associated with the AI model.

10. The method according to claim 7, wherein the method is performed at a communication apparatus, the communication apparatus is a terminal device, the QoS configuration comprises a QoS rule, and the QoS rule comprises the information associated with the AI model.

11. The method according to any one of claims 7 to 10, wherein the information associated with the AI model further indicates at least one of the following:
a user experience requirement of the traffic flow;
an index of the AI model; or
a partitioning point of the AI model.

12. A communication apparatus, comprising:
a processing module, configured to generate a quality of service QoS configuration of a traffic flow, wherein the traffic flow is associated with an artificial intelligence AI model, the QoS configuration comprises information associated with the AI model, and the information associated with the AI model indicates at least one of the following:
a requirement, in terms of computing power, of training or inference of the AI model; or
a requirement, in terms of a latency, of training or inference of the AI model; and
an interface module, configured to send the QoS configuration to another communication apparatus.

13. The communication apparatus according to claim 12, wherein the interface module is further configured to receive a QoS requirement of the traffic flow; and
the processing module is further configured to determine, based on the QoS requirement, the information associated with the AI model.

14. The communication apparatus according to claim 12 or 13, wherein the another communication apparatus is a core network device having a user plane function, the QoS configuration comprises a packet detection rule PDR, and the PDR comprises the information associated with the AI model.

15. The communication apparatus according to claim 12 or 13, wherein the another communication apparatus is an access network device, the QoS configuration comprises a QoS profile, and the QoS profile comprises the information associated with the AI model.

16. The communication apparatus according to claim 12 or 13, wherein the another communication apparatus is a terminal device, the QoS configuration comprises a QoS rule, and the QoS rule comprises the information associated with the AI model.

17. The communication apparatus according to any one of claims 12 to 16, wherein the information associated with the AI model further indicates at least one of the following:
a user experience requirement of the traffic flow;
an index of the AI model; or
a partitioning point of the AI model.

18. A communication apparatus, comprising:
an interface module, configured to receive a quality of service QoS configuration of a traffic flow, wherein the traffic flow is associated with an artificial intelligence AI model, the QoS configuration comprises information associated with the AI model, and the information associated with the AI model indicates at least one of the following:
a requirement, in terms of computing power, of training or inference of the AI model; or
a requirement, in terms of a latency, of training or inference of the AI model; and
a processing module, configured to control, based on the QoS configuration, the interface module to perform transmission of the traffic flow.

19. The communication apparatus according to claim 18, wherein the communication apparatus is a core network device having a user plane function, the QoS configuration comprises a packet detection rule PDR, and the PDR comprises the information associated with the AI model.

20. The communication apparatus according to claim 18, wherein the communication apparatus is an access network device, the QoS configuration comprises a QoS profile, and the QoS profile comprises the information associated with the AI model.

21. The communication apparatus according to claim 18, wherein the communication apparatus is a terminal device, the QoS configuration comprises a QoS rule, and the QoS rule comprises the information associated with the AI model.

22. The communication apparatus according to any one of claims 18 to 21, wherein the information associated with the AI model further indicates at least one of the following:
a user experience requirement of the traffic flow;
an index of the AI model; or
a partitioning point of the AI model.

23. A communication apparatus, comprising:
a processor, wherein the processor is coupled to a memory, the memory stores computer program code, and the memory and the computer program code are configured to, together with the processor, enable the communication apparatus to perform the method according to any one of claims 1 to 6 or the method according to any one of claims 7 to 11.

24. A computer-readable storage medium, comprising machine-executable instructions, wherein when the machine-executable instructions are executed by a device, the device is enabled to perform the method according to any one of claims 1 to 6 or the method according to any one of claims 7 to 11.

25. A computer program product, comprising computer program code, wherein when the computer program code is run, the method according to any one of claims 1 to 6 is implemented, or the method according to any one of claims 7 to 11 is implemented.
